# EUROPÄISCHE PATENTANMELDUNG

(11) **EP 1 235 128 A2**
(43) Veröffentlichungstag der Anmeldung: **28.08.2002**
(21) Anmeldenummer: 02002587.0
(22) Anmeldetag: 05.02.2002
(51) Int. Cl.: G05D 23/02

(54) **Vorrichtung zum Anbringen eines Stellantriebes oder eines Thermostatklopfes an einem Ventil**

(30) Priorität: 27.02.2001 DE 10109644
(71) Anmelder: Behr Thermot-tronik GmbH, 70806 Kornwestheim (DE)
(72) Erfinder: Buschatz, Immanuel, 72669 Unterensingen (DE); Bader, Peter, 71672 Marbach (DE); Stempel, Dieter, 71706 Markgröningen (DE); Stammerjohann, Dieter, 70806 Kornwestheim (DE)
(74) Vertreter: Patentanwälte , Ruff, Wilhelm, Beier, Dauster & Partner

(57) **Zusammenfassung**

Bei einer Vorrichtung zum Anbringen eines Stellantriebs (10) an einem Ventil (12) wird an dem Ventil ein Ring (20) befestigt, der einen nach innen gerichteten Ringbund (21) und auf der dem Stellantrieb zugewandten Seite in Abstand zu dem Ringbund (21) mit in den Ring hineinragenden in radialer Richtung nachgiebig angeordneten Rastelementen (22, 23) versehen ist.

## Beschreibung

Die Erfindung betrifft eine Vorrichtung zum Anbringen eines Stellantriebs oder eines Thermostatkopfes an einem Ventil mit einem an dem Ventil befestigbaren Ring, an welchem der Stell-antrieb oder eines Thermostatkopfes mittels einer Schnappverbindung anbringbar ist.

Es ist bekannt (DE-U 299 05 274), derartige Stellantriebe oder Thermostatköpfe mittels einer Überwurfmutter an einem Ventil anzubringen, das einen Ansatz aufweist, der mit einem entsprechenden Gewinde versehen ist.

Es ist auch bekannt, auf das Außengewinde des Ansatzes des Ventils einen mit Innengewinde versehenen Ring aufzuschrauben, der mit einer nach außen offenen, umlaufenden Nut versehen ist. Auf diesen Ring wird dann der Stellantrieb aufgestützt und dann mittels einer Schnappverbindung gehalten. Hierzu ist der Stellantrieb mit zwei gegenüberliegenden, schwenkbaren Hebeln versehen, die mit hakenförmigen Enden in die Nut des Ringes von außen eingreifen. Die Schwenkhebel sind mit Federn belastet, die diese eingerastete Stellung sichern.

Der Erfindung liegt die Aufgabe zugrunde, eine Vorrichtung der eingangs genannten Art zu schaffen, die keine wesentlichen Änderungen an dem Stellantrieb erfordert.

Diese Aufgabe wird dadurch gelöst, dass der Ring mit einem nach innen gerichteten Ringbund und auf der dem Stellantrieb zugewandten Seite in Abstand zu dem Ringbund mit in den Ring hineinragenden, in radialer Richtung nachgiebig angeordneten Rastelementen versehen ist, die mit dem Ringbund eine Aufnahme für einen nach außen gerichtete Vorsprünge aufweisenden Ansatz des Stellantriebes bilden.

Die erfindungsgemäße Vorrichtung hat den Vorteil, dass an dem Stellantrieb praktisch keine Änderung vorgenommen werden muss. Der Stellantrieb kann somit wahlweise mittels einer Überwurfmutter oder mittels des Ringes und der Schnappverbindung an einem Ventil angebracht werden. Der Ansatz des Stellantriebes, der einen umlaufenden oder mehrere nach außen gerichtete Vorsprünge aufweist, dient in gleicher Weise zur Aufnahme einer Überwurfmutter als auch zum rastenden Einstecken in die von den Rastelementen und dem Ringbund des Ringes gebildete Aufnahme.

Weitere Merkmale und Vorteile der Erfindung ergeben sich aus der nachfolgenden Beschreibung der in der Zeichnung dargestellten Ausführungsform und den Unteransprüchen.
- Fig. 1: zeigt eine teilweise aufgebrochene Ansicht eines mittels einer erfindungsgemäßen Vorrichtung an einem Ventil befestigten Stellantriebs,
- Fig. 2: einen um 90° gedrehten Schnitt entlang der Linie II-II der Fig. 1 ohne den Stellantrieb und ohne die Elemente des Ventils und
- Fig. 3: einen Schnitt entlang der Linie III-III der Fig. 2.

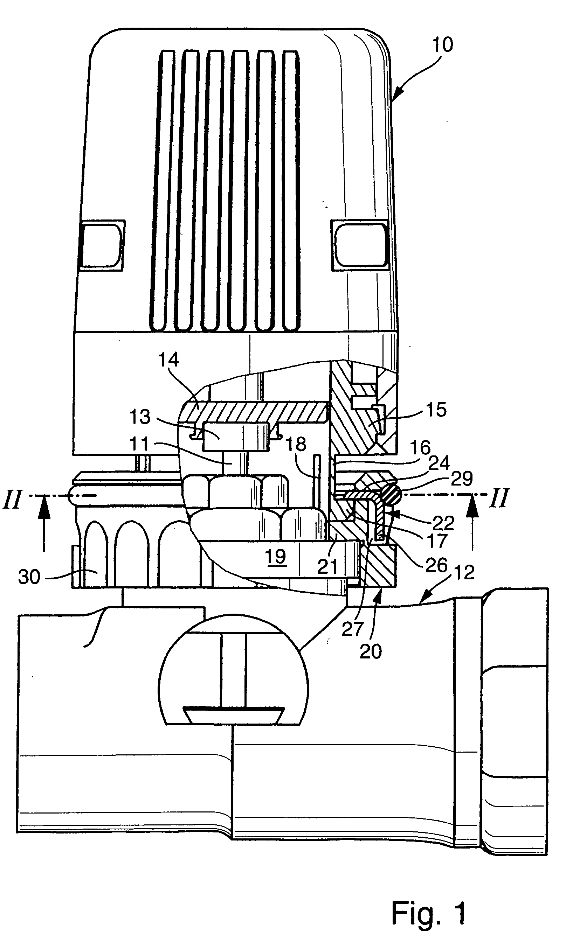

Der in Fig. 1 dargestellte Stellantrieb 10 entspricht im wesentlichen der Bauart nach der DE-U 299 05 274, so dass auf die dortige Beschreibung verwiesen werden kann. Ein federbelasteter Ventilstößel 11 des Ventils 12 wirkt über ein Distanzstück 13 auf eine Druckplatte 14 des Stellantriebs 10. Der Grundkörper 15 des Stellantriebs 10 ist mit einem axialen Ansatz 16 versehen, an dessen Ende ein umlaufender, nach außen ragender Vorsprung 17 angeformt ist. Der Ansatz 16 ist mit mehreren über den Umfang verteilten axialen Schlitzen 18 versehen, die bei der Verwendung einer Überwurfmutter zweckmäßig sind.

Das Ventil 12 weist einen zu dem Stößel 13 konzentrischen Ansatz 19 mit einem Außengewinde auf. Auf diesen Ansatz 19 ist ein Ring 20 mit einem Innengewinde aufgeschraubt.

Der Ring 20 ist mit einem nach innen ragenden, umlaufenden Ringbund 21 versehen, der sich an die Stirnseite des Ansatzes 19 des Ventils 12 anlegt. In axialem Abstand in Richtung zu dem Stellantrieb 10 hin ist der Ring mit zwei diametral gegenüberliegenden Rastelementen 22, 23 versehen, die eine Aufnahme für die Vorsprünge 17 des Ansatzes 16 bilden. Die Rastelemente 22, 23 sind scheibenförmige Ringsegmente aus Blech, die in diametral gegenüberliegende, radiale Schlitze 24, 25 des Ringes 20 eingesteckt sind. Die Ringsegmente 22, 23 sind mit abgewinkelten Laschen 26 versehen, die in Aussparungen 27 des Ringes 20 eingreifen. Diese abgewinkelten Laschen 26 dienen als Angriffsflächen für ein Werkzeug, z.B. einen Schraubendreher, um die Rastung zu lösen. Vorstehende Nasen 31 zu beiden Seiten der Rastelemente 22, 23 begrenzen die Eindringtiefe der Ringsegmente 22, 23 in die Schlitze 24, 25.

Die Schlitze 24, 25 beginnen in einer umlaufenden Ringnut 28 des Rings 20. In diese Ringnut 28 ist ein Federelement eingelegt, beispielsweise ein O-Ring 29. Dieses Federelement belastet die Rastelemente 22, 23 in radialer Richtung und hält sie, nachdem die Ansätze 17 eingeschnappt sind, in der Rastposition.

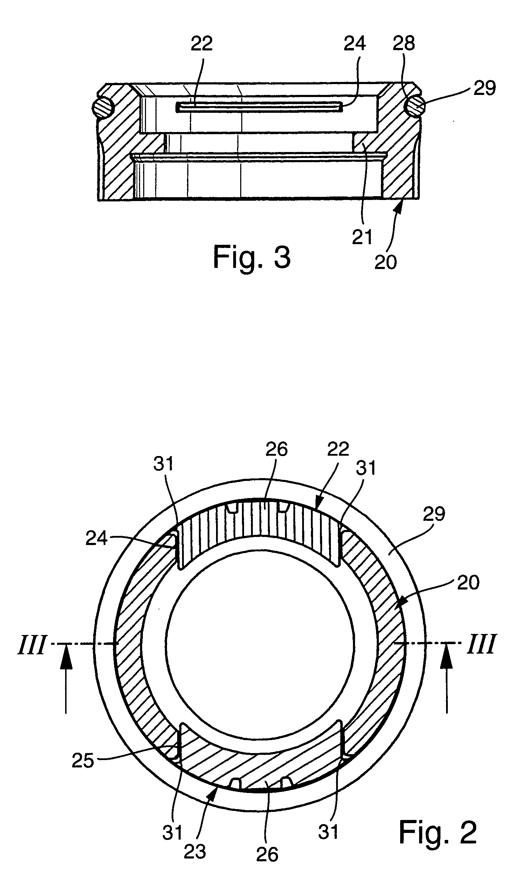

Wie aus Fig. 1 zu ersehen ist, sind die unteren, äußeren Ränder der Vorsprünge 17 angefast. Ebenso ist der im Stellelement zugewandte Rand der Rastelemente 22, 23 angefast, wie das aus Fig. 1 und 3 zu ersehen ist. Bei dem Herstellen der Schnappverbindung drücken somit die Vorsprünge 17 die Rastelemente 22, 23 nach außen, die dann in die in Fig. 1 und 2 dargestellte Raststellung zurückschnappen, wenn der Stellantrieb 10 vollständig eingesteckt ist.

Wie insbesondere aus Fig. 1 zu ersehen ist, ist der Ring auf seinem Außenumfang unterhalb des Federelementes, dem O-Ring 29, mit gleichmäßig über den Umfang verteilten axialen Aussparungen 30 versehen, so dass eine Profilierung gebildet wird. Diese Profilierung erlaubt es, bei der Montage den Ring 20 manuell ausreichend fest auf den Ansatz 19 des Ventils 12 aufzuschrauben.

Bei einer abgewandelten Ausführungsform ist der Ring auf einen Ansatz eines Ventils aufgeklipst. Hierzu ist der Ansatz mit einem umlaufenden Kragen versehen, der von einer umlaufenden oder mehreren einzelnen Rastnasen des Rings umgriffen wird.

Die Erfindung erlaubt eine sehr einfache Montage eines Stellantriebs mittels einer Schnappverbindung. Da der Stellantrieb selbst nicht verändert worden ist, kann er genauso gut aber auch mit einer Überwurfmutter verwendet werden. Für die Schnappverbindung sind die axialen Schlitze 18 des Ansatzes 16 nicht erforderlich. Die Vorsprünge 17 müssen nicht in radialer Richtung zurückweichen, da die Rastelemente 22, 23 beim Aufstecken nachgeben. Um die Verbindung zu sichern, kann deshalb in nicht näher dargestellter Weise in Verbindung mit der Schnappverbindung vorgesehen werden, dass innen in den Ansatz 16 ein Ring eingelegt wird, der den Ansatz 16 in radialer Richtung versteift.

Die Erfindung bietet insbesondere auf Baustellen einen Vorteil, insbesondere wenn dem Stellantrieb auch eine elektrische Heizeinrichtung zugeordnet ist. Die Montage kann von dem Heizungsbauer auf der Baustelle abgeschlossen werden. Ein Elektriker schließt dann den Stellantrieb elektrisch an und stellt die Schnappverbindung her, indem er den Stellantrieb 10 in den Ring 20 einsteckt.

## Patentansprüche

1. Vorrichtung zum Anbringen eines Stellantriebs oder Thermostatkopfes an einem Ventil mit einem an dem Ventil befestigbaren Ring, an welchem der Stellantrieb oder Thermostatkopf mittels einer Schnappverbindung anbringbar ist, **dadurch gekennzeichnet, dass** der Ring (20) mit einem nach innen gerichteten Ringbund (21) und auf der dem Stellantrieb (10) zugewandten Seite in Abstand zu dem Ringbund (20) mit in den Ring hineinragenden, in radialer Richtung nachgiebig angeordneten Rastelementen (22) versehen ist, die mit dem Ringbund (20) eine Aufnahme für einen nach außen gerichtete Vorsprünge (17) aufweisenden Ansatz (16) des Stellantriebs (10) oder Thermostatkopfes bilden.

2. Vorrichtung nach Anspruch 1, **dadurch gekennzeichnet, dass** der Ring (20) mit einem auf ein Außengewinde des Ventils (12) aufschraubbaren Innengewinde versehen ist.

3. Vorrichtung nach Anspruch 1 oder 2, **dadurch gekennzeichnet, dass** als Rastelemente (22, 23) wenigstens zwei scheibenförmige Ringsegmente vorgesehen sind, die in radial gerichteten Schlitzen (24, 25) des Rings (20) geführt sind.

4. Vorrichtung nach Anspruch 3, **dadurch gekennzeichnet, dass** der Weg der Ringsegmente (22, 23) in Richtung zur Mitte des Rings (20) hin mittels wenigstens einer an dem Ringsegment vorgesehenen Nase (31) begrenzt ist.

5. Vorrichtung nach Anspruch 3, **dadurch gekennzeichnet, dass** die Rastelemente (22, 23) mit einer Werkzeugangriffsstelle (26) versehen sind.

6. Vorrichtung nach Anspruch 3, 4 oder 5, **dadurch gekennzeichnet, dass** der innere Rand der Ringsegmente (22, 23) auf der dem Ventil (12) abgewandten Seite angefast ist.

7. Vorrichtung nach einem der Ansprüche 1 bis 6, **dadurch gekennzeichnet, dass** die Rastelemente (22, 23) mit einem Federelement in Richtung zur Ringmitte belastet sind.

8. Vorrichtung nach einem der Ansprüche 1 bis 7, **dadurch gekennzeichnet, dass** der Ring (20) außen mit einer umlaufenden Nut (28) versehen ist, in deren Bereich sich die Schlitze (24, 25) befinden.

9. Vorrichtung nach Anspruch 8, **dadurch gekennzeichnet, dass** in der Nut (28) ein umlaufendes Federelement (29) angeordnet ist.

10. Vorrichtung nach einem der Ansprüche 1 bis 9, **dadurch gekennzeichnet, dass** der Ring (20) auf seinem Außenumfang mit einer Profilierung versehen ist.

11. Vorrichtung nach einem der Ansprüche 1 bis 10, **dadurch gekennzeichnet, dass** der Ring mit einer Klipsverbindung für den Ansatz des Ventils versehen ist.
